# EUROPEAN PATENT APPLICATION

(11) **EP 4 730 703 A1**
(43) Date of publication of application: **22.04.2026**
(21) Application number: 24306714.7
(22) Date of filing: 16.10.2024
(51) Int. Cl.: H04L 9/40, H04L 51/212

(54) **METHOD OF APPLICATION MESSAGE FILTERING**

(71) Applicant: THALES DIS FRANCE SAS, 92190 Meudon (FR)
(72) Inventor: LHOUMEAU, Yann, 83200 TOULON (FR); BOHER, Teddy, 84300 CAVAILLON (FR); SCHAFF, Alexandre, 13850 GREASQUE (FR)
(74) Representative: Bricks, Amélie

(57) **Abstract**

The present invention relates to a method for filtering a message comprising arguments, to be exchanged between a client device and an application server, performed by an applicative gateway connected to said client device and said application server and configured for applying a positive filtering, and by an applicative risk computer connected to said applicative gateway and configured for applying a negative filtering, said method comprising, performed by said applicative gateway :
• during a configuration phase:
obtaining (S0) an Application Programming Interface (API) description file comprising templates of message arguments and indicating for each template whether an argument matching said template shall be subject or not to a negative filtering by the applicative risk computer,
• at runtime:
o receiving (S1) a message from said client device or application server,
o applying (S2) a positive filtering to said received message,
o generating (S3) from said received message a message extract, wherein said message extract comprises arguments of said received message which require a negative filtering by the applicative risk computer according to said obtained API description file, and wherein said message extract does not comprise arguments of said received message which do not require a negative filtering by the applicative risk computer according to said obtained API description file,
∘ sending (S4) said generated message extract to said applicative risk computer,
∘ receiving (S6) from the applicative risk computer a risk score computed by the applicative risk computer from said message extract,
∘ when said received risk score is above a predetermined threshold, triggering a security countermeasure (S7).

## Description

### FIELD OF THE INVENTION

The present invention relates to the field of application protection, and more particularly of a method for performing an efficient filtering of an application message by an applicative gateway and an applicative risk computer.

### BACKGROUND OF THE INVENTION

Organizations need to mitigate risks to their applications on the web. Security must be provided on the network before requests reach application servers. Gateways and applicative risk computers provide such a security layer by filtering incoming requests using predefined rules and deciding what action to take if a rule is triggered, therefore enabling a secure deployment of applications. Similarly, gateways and applicative risk computers may filter answers to such requests, generated by application servers, in order to detect answers whose format or content is different than expected. Such an unexpected answer may for example correspond to a confidential data leak and may be the result of a misconfiguration of the web app server or of a malware.

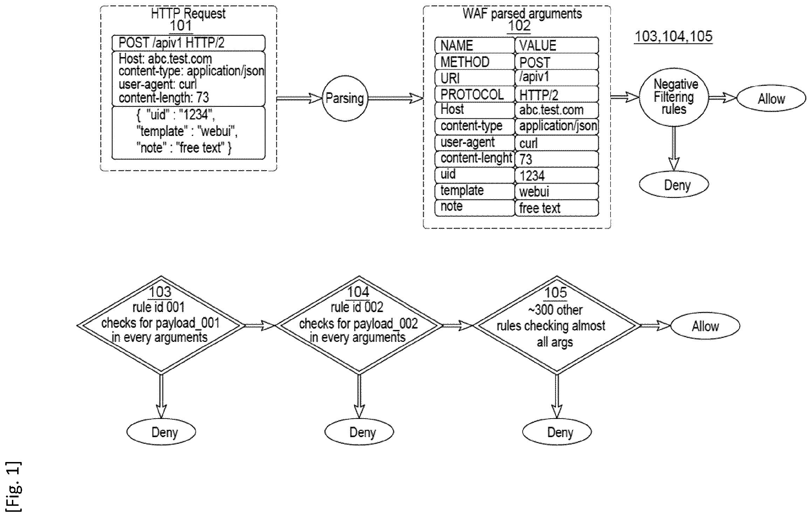

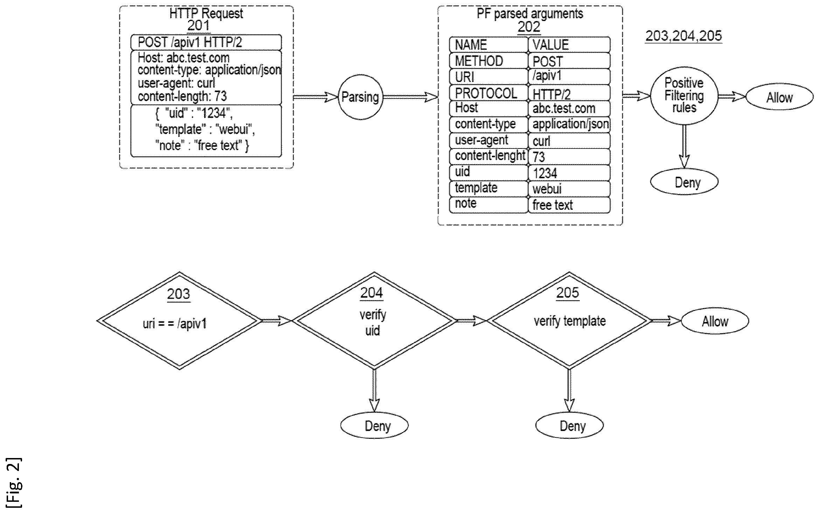

Filtering may be based either on negative filtering as shown on **Figure 1** or on positive filtering as shown on **Figure 2****.** Filtering may be performed using a whitelist made of positive filtering rules which describe the messages which are considered as legitimate and can be allowed. Such a positive filtering is usually performed by a gateway placed in a network between a client device issuing a request and an application server providing an answer to this request. An example of such a filtering using positive filtering rules is provided on **Figure 2****.** In this example, a HTTP request 201 is turned, by parsing the request, into collections of arguments' names and arguments' values 202. All the arguments of the request subject to a positive filtering rule are then checked 203, 204, 205 against their positive filtering rule, one argument after the other. Such a filtering can protect against any rogue request or answer that does not correspond to the positive filtering rules. Nevertheless, such a filtering is usually difficult to set up efficiently. Positive rules are often too loose and allow messages corresponding in fact to attacks. On the contrary, when a positive rule set is too strict, it may deny legitimate requests or answers.

Additional filtering rules may be defined as negative filtering rules. Such rules, based on the analysis of existing attacks and malevolent requests or answers, describe messages which are not legitimate and should be denied. Such a negative filtering may for example be performed by an applicative risk computer located, as the gateway, between the client device and the application server. An example of such a filtering using negative filtering rules is provided on **Figure** 1. In this example, a HTTP request 101 is turned, by parsing the request, into collections of arguments' names and arguments' values 102 which are then subject to the negative filtering rules 103,104,105..., one rule after the other.

In order to improve message filtering efficiency both filtering types may be combined. Some existing solutions therefore apply to the same messages both a positive filtering by a gateway and a negative filtering by an applicative risk computer. Nevertheless, such a way of combining filtering leads to a filtering that may be accurate but has a low efficiency. Indeed, all arguments are filtered twice. In addition, filtering by the applicative risk computer being much slower than filtering by the gateway, parsing all the arguments a second time by the applicative risk computer induces a strong performance penalty.

Consequently, there is a need for an optimized application message filtering method, combining both positive and negative filtering in a way ensuring an accurate filtering of truly malicious messages, with better performances than existing solutions.

### SUMMARY OF THE INVENTION

For this purpose and according to a first aspect, this invention therefore relates to a method for filtering a message comprising arguments, to be exchanged between a client device and an application server, performed by an applicative gateway connected to said client device and said application server and configured for applying a positive filtering, and by an applicative risk computer connected to said applicative gateway and configured for applying a negative filtering,
said method comprising, performed by said applicative gateway :
- during a configuration phase:
   o obtaining an Application Programming Interface (API) description file comprising templates of message arguments and indicating for each template whether an argument matching said template shall be subject or not to a negative filtering by the applicative risk computer,
- at runtime:
   ∘ receiving a message from said client device or application server,
   ∘ applying a positive filtering to said received message,
   ∘ generating from said received message a message extract, wherein said message extract comprises arguments of said received message which require a negative filtering by the applicative risk computer according to said obtained API description file, and wherein said message extract does not comprise arguments of said received message which do not require a negative filtering by the applicative risk computer according to said obtained API description file,
   o sending said generated message extract to said applicative risk computer,
   o receiving from the applicative risk computer a risk score computed by the applicative risk computer from said message extract,
   o when said received risk score is above a predetermined threshold, triggering a security countermeasure.

By doing so, all message arguments are subject to a positive filtering, and also to a negative filtering if needed according to the API description file, at a reduced cost since only the gateway has to parse in full the message it receives, and the negative filtering is only applied to the message extract.

Said message may be a HTTP request to a web application or a HTTP answer generated by said web application.

In said API description file, each message argument template may comprise at least one parameter among an argument's name, an argument's type and an argument's value pattern.

In said API description file, each message argument template may comprise a field indicating whether any argument matching said template shall be subject or not to a negative filtering by the applicative risk computer.

According to a second aspect, this invention therefore relates also to a computer program product directly loadable into the memory of at least one computer, comprising software code instructions for performing the steps of the method according to the first aspect when said product is run on the computer.

According to a third aspect, this invention therefore relates also to an applicative gateway configured for filtering, with an applicative risk computer, a message comprising arguments, to be exchanged between a client device and an application server, said applicative gateway being configured for applying a positive filtering and said applicative risk computer being configured for applying a negative filtering,
said applicative gateway comprising a processor, a memory and an interface and wherein :
- said interface of the applicative gateway is configured for connecting said applicative gateway to said client device, to said application server and to said applicative risk computer;
- said applicative gateway is configured for:
   ∘ during a configuration phase:
      ▪ obtaining an Application Programming Interface (API) description file comprising templates of message arguments and indicating for each template whether an argument matching said template shall be subject or not to a negative filtering by the applicative risk computer,
   ∘ at runtime:
      ▪ receiving a message from said client device or application server,
      ▪ applying a positive filtering to said received message,
      ▪ generating from said received message a message extract, wherein said message extract comprises arguments of said received message which require a negative filtering by the applicative risk computer according to said obtained API description file, and wherein said message extract does not comprise arguments of said received message which do not require a negative filtering by the applicative risk computer according to said obtained API description file,
      ▪ sending said generated message extract to said applicative risk computer,
      ▪ receiving from the applicative risk computer a risk score computed by the applicative risk computer from said message extract,
      ▪ when said received risk score is above a predetermined threshold, triggering a security countermeasure.

According to a fourth aspect, this invention therefore relates also to a system comprising said applicative gateway according to the third aspect and an applicative risk computer.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 illustrates schematically an example of a filtering using negative filtering rules;
- Figure 2 illustrates schematically an example of a filtering using positive filtering rules;
- Figure 3 is a schematic illustration of a system according to an embodiment of the present invention;
- Figure 4 is a schematic illustration of a gateway and an applicative risk computer according to an embodiment of the present invention;
- Figure 5 illustrates schematically a method for filtering a message according to an embodiment of the present invention;
- Figure 6 illustrates an example of API description file according to the present invention;
- Figure 7 illustrates an example of a message received by the gateway according to the present invention;
- Figure 8 illustrates an example of the result of applying a canonicalization of the message of Figure 7 according to the method of the present invention
- Figure 9 illustrates an example of the message extract generated by applying the API description file of Figure 6 to the message of Figure 8 according to the method of the present invention.

### DETAILED DESCRIPTION OF EMBODIMENTS OF THE INVENTION

The invention aims at performing an efficient filtering of messages exchanged between a client device and an application server to protect this application server against attacks.

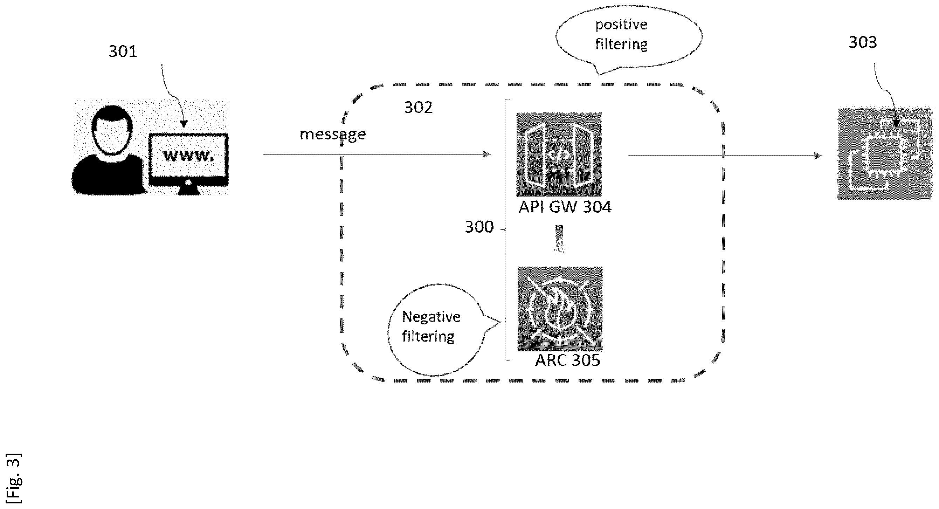

As shown on **Figure 3**, a client device 301 may exchange messages, through a computer network 302, with an application server 303 running the application to be protected. Such a computer network may be a wireless network such as a WiFi network, or a wired network such as an Ethernet network. Such messages include requests sent by the client to the application, and answers generated in response by the application and sent from the application server to the client device.

As an example, such messages may be HTTP requests to a web application and HTTP answers generated in return by this web application.

Such a request may be malicious and be a threat to the application. Its body may for example contain a malicious payload designed to compromise the application server when the application processes the request.

To mitigate the risk posed by such malicious requests, an applicative gateway 304 (API GW), hereafter called gateway, is located between the client device and the application server and may filter the requests sent by the client device to the application in order to prevent malicious requests from reaching the application.

In some cases, it may also be needed to filter messages sent back from the application to the client device. For example, an attacker may have successfully transmitted to the application despite the filtering of the requests by the gateway a malicious request instructing the application to send back to the attacker confidential data he is not entitled to access. It may be the result of a poor configuration of the gateway with too loose filtering rules. Alternatively, the application itself may be misconfigured and may leak confidential data to the client device as a response to a legitimate request. To mitigate such risks, the gateway may also filter answers sent from the application to the client device.

The gateway is designed to filter messages by applying to it a positive filtering based on predefined positive filtering rules. Such rules may for example be defined by the administrator and are stored in a non-volatile memory (NVM) of the gateway. Such positive filtering rules, also called "whitelist" rules, are designed to filter out messages which do not correspond to legitimate messages.

In addition to the gateway, the computer network 302 also hosts an applicative risk computer 305 (ARC) connected to said applicative gateway. The applicative risk computer is intended to apply to the messages an additional filtering, this time a negative filtering based on negative filtering rules. Negative filtering rules, also called "blacklist" rules, are designed to filter out messages corresponding to known malicious messages.

In the embodiment depicted on Figure 3, the gateway 304, the application server 303, and the applicative risk computer 305 are separate devices. In a different embodiment, a single device may gather these three functions, filtering requests it receives as input using both positive and negative filtering rules before passing it to the application and/or filtering answers of the application before transmitting it to the client device.

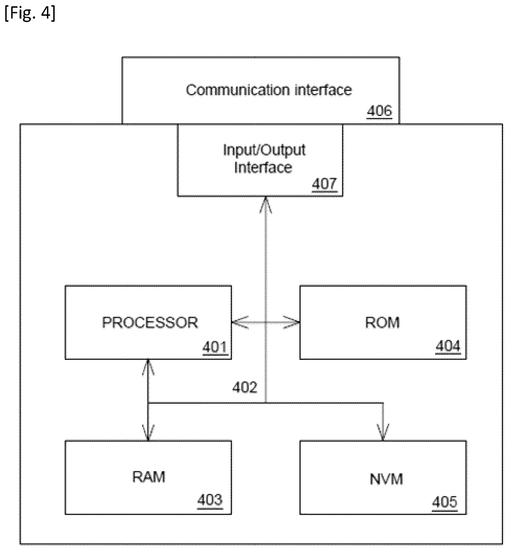

As depicted on **Figure 4**, the gateway and the applicative risk computer may comprise a processor 401, connected via a bus 402 to a random-access memory (RAM) 403, a read-only memory (ROM) 404, and/or a non-volatile memory (NVM) 405. The gateway and the applicative risk computer may further include a communication interface 406 connected to the bus and which may be used to connect them to the computer network 302. They may also include an input-output interface 407 providing interfaces to an administrator, such as one or more screens, loudspeakers, a mouse, tactile surfaces, a keyboard etc... Such an administrator may administrate the gateway and the applicative risk computer either directly through the input-output interface 407 or remotely through a user interface displayed at a remote administration device connected to the devices through the computer network 302.

As explained above, setting up both a positive filtering and a negative filtering on the same message may lead to a severe performance drop. Therefore, the goal of the invention is to provide a method, and associated device, enabling to combine both types of filtering on messages incoming the gateway at a reduced cost without lowering the protection level brought by each of the filtering.

In order to achieve this goal, a first main idea of the invention is to apply the negative filtering, which may be the costliest, only to arguments of the messages which are deemed as potentially malicious. On the contrary, arguments which verify a specific template and are deemed safe may only be subject to the positive filtering performed by the gateway.

Nevertheless, such an optimization may have a limited impact if the applicative risk computer has to parse all the arguments of a message in order to determine which should be subject to a negative filtering and which are not required to undergo such a filtering. Therefore, the second main idea of the invention is to make the gateway, which already parses all arguments of messages for applying its positive filtering, determine which arguments should be subject to a negative filtering and transmit these, and only these, to the applicative risk computer.

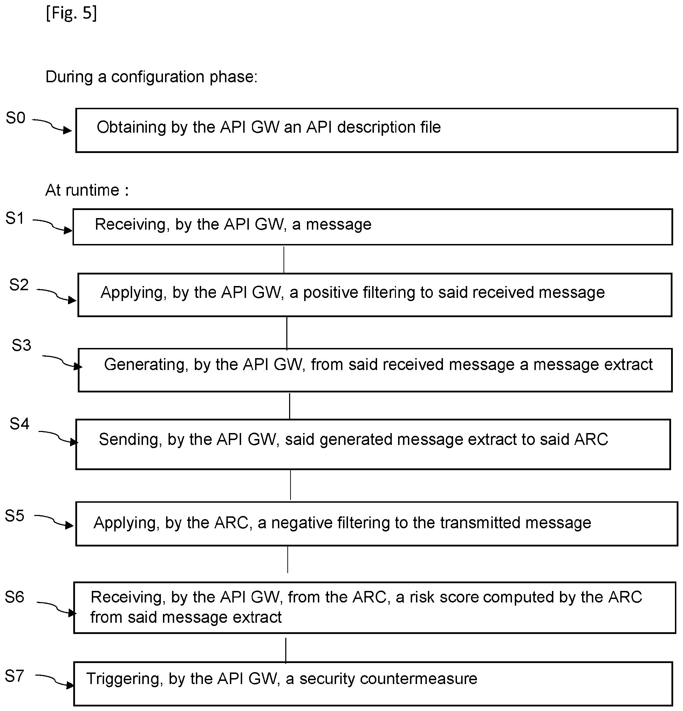

The following paragraphs describe the steps of the method according to the first aspect of the invention, as depicted on **Figure 5**.

First, the gateway has to learn how to differentiate, among the various arguments of a message to be filtered, the arguments which should be subject to a negative filtering and the arguments for which a positive filtering is considered sufficient. To do so, during a configuration phase, in a step S0, the gateway obtains an Application Programming Interface (API) description file comprising templates of message arguments and indicating for each template whether an argument matching said template shall be subject or not to a negative filtering by the applicative risk computer. Each template is a set of conditions that an argument shall verify to match the template. Such conditions are expressed using parameters which may for example be among the argument's name, the argument's type and an argument's value pattern.

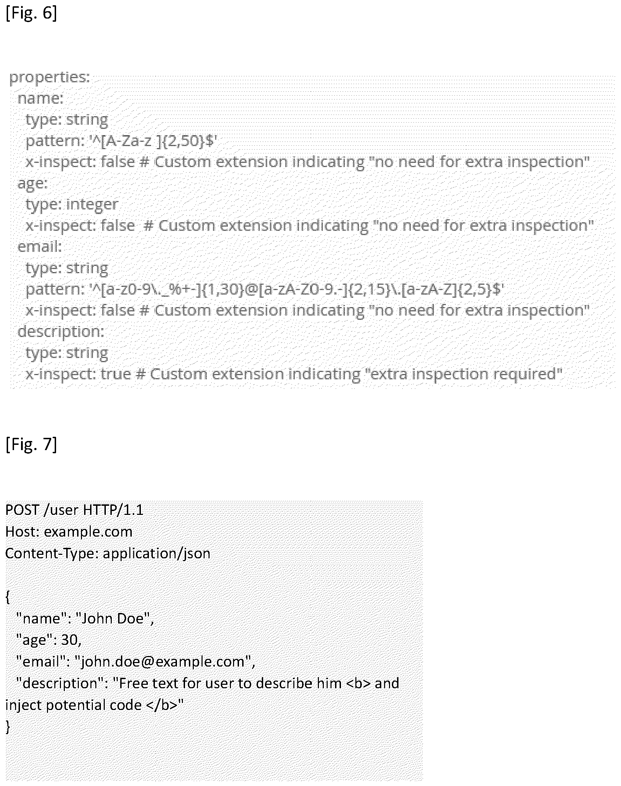

An example of API description file is provided on **Figure** 6. In this example, the API description file comprises four templates :
- the first template characterizes arguments whose name is "name", whose type is "string" and whose value matches the pattern ^[A-Za-z]{2,50}$ which is a regular expression specifying any string, of length between 2 and 50, containing only letters from A to Z, either in capital letters or not;
- the second template characterizes arguments of name "age", of type "integer";
- the third template characterizes arguments whose name is "email", whose type is "string" and whose value matches the pattern ^[a-z0-9\._%+-]{1,30}@[a-zA-Z0-9.-]{2,15}\.[a-zA-Z]{2,5}$ which is a regular expression specifying any string starting with a first substring containing any combination of letters from A to Z, either in capital letters or not, numbers and special characters ". _ % + -", followed by "@" followed by a second substring containing any combination of letters from A to Z, either in capital letters or not, numbers and special characters ".-", followed by a dot, followed by a third substring containing any combination of at least 2 letters from A to Z, either in capital letters or not;
- the fourth template characterizes arguments whose name is "description" and whose type is "string".

The API description file comprises for each template an indication whether each argument matching the template shall be subject or not to a negative filtering by the applicative risk computer. In the example of Figure 6, each template has an additional x-inspect field which can be equal to true, in which case each argument matching the template shall be subject to a negative filtering, or equal to false, in which case each argument matching the template shall not be subject to a negative filtering.

Such an API description file may be obtained by receiving a file being uploaded by an administrator of the gateway. It may for example be transferred from a removable drive plugged into the gateway to a memory of the gateway. Alternatively, the gateway may download the API description file from a trusted online repository.

Then at runtime, the gateway performs the following step.

In a first step S1, the gateway receives a message to be filtered from said client device, if it is a request, or from the application server if it is an answer to a request. Such a message is composed of multiple arguments. Each argument may for example be characterized by its name, its type and its value. An example is given on **Figure 7****.** In this example, the message to be filtered is a HTTP POST message comprising a header and four arguments: name, age, email and description.

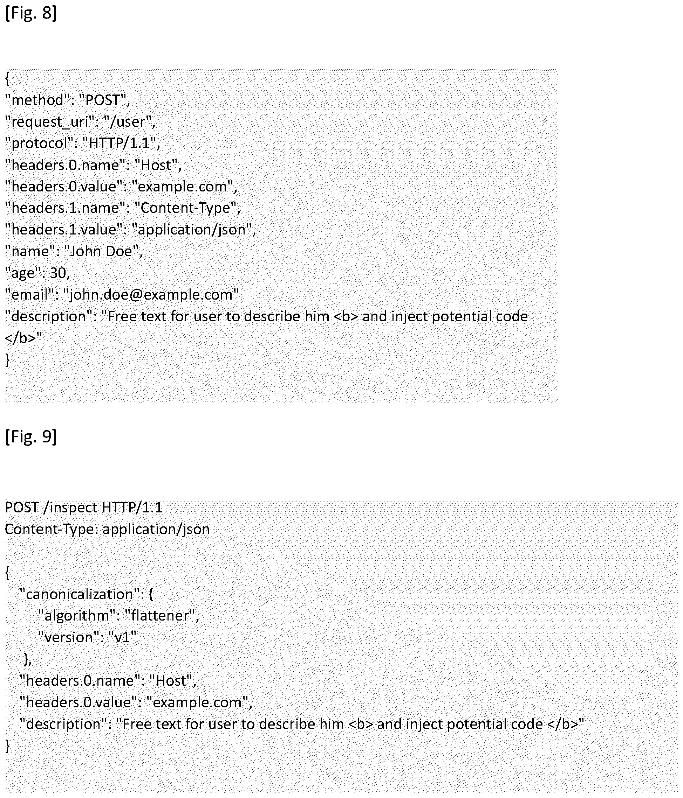

At this first step, the message may be canonicalized. Such an operation turns the message into a standardized format. **Figure** 8 provides as example the result of applying such a canonicalization to the message of Figure 7. In the resulting message the message header has been converted to arguments, such that the message only contains a set of arguments.

In a second step S2, the gateway applies a positive filtering to the received message.

When all arguments of the message are recognized as safe by the positive filtering, there is no need for an additional negative filtering of the message and the gateway transmits the message to its destination. In this case the method according to the invention is not performed. Therefore, in the rest of the description we suppose that at this second step some arguments of the message are not validated by the positive filtering performed by the gateway.

In a third step S3, the gateway generates from the received message, after this message has been canonicalized, when this operation is performed at the first step, a message extract. This message extract comprises arguments of the received message which require a negative filtering by the applicative risk computer according to the API description file obtained by the gateway during the configuration phase. The message extract does not comprise arguments of the received message which do not require a negative filtering by the applicative risk computer according to the API description file. In order to generate such a message extract, the gateway may for example, for each argument of the received message, compare the tested argument to each of the templates of the API description file until either the tested argument matches one template or all templates of the API description file have been tested. When an argument of the received message matches one of the templates of the API description file, the gateway may then take action depending on the indication associated to this template. When the template indicates that the matching argument shall be subject to a negative filtering by the applicative risk computer, the gateway may add the matching argument to the message extract. When an argument does not match any of the templates of the API description file, the gateway may add it to the message extract to have it subjected to a negative filtering by the applicative risk computer.

**Figure 9** provides as an example the message extract generated by applying the API description file of Figure 6 to the message of Figure 8. In this example, the arguments name, age, email and description of the received message match respectively the first, second, third and fourth templates of the API description file. Since the first three templates comprise a x-inspect parameter equal to "false", the arguments name, age and email of the message are not added to the message extract. On the contrary, since the fourth template comprises a x-inspect parameter equal to "true", the description argument of the message is added to the message extract.

In an embodiment, the gateway may also add the message extract any argument of the message which does not match any of the templates of the API description file.

In a fourth step S4, the gateway sends the generated message extract to the applicative risk computer.

In a fifth step S5, the applicative risk computer applies a negative filtering to the transmitted message extract. The applicative risk computer tries to match each argument of the message extract with a set of negative filtering rules stored in a memory of the applicative risk computer. At the end of this step, the applicative risk computer computes a risk score for the message extract depending on the result of the applied negative filtering, and transmits this risk score to the gateway. This risk score is meant to indicate the trustworthiness of the message. As an example, the more there are arguments of the message extract matching negative filtering rules of the applicative risk computer, the more the message is likely to be a malicious request from an attacker, or a request answer comprising forbidden data, the higher the risk score will be.

In a sixth step S6, the gateway receives from the applicative risk computer the risk score computed by the applicative risk computer from said message extract at the fifth step S5.

In a seventh step S7, when the received risk score is above a predetermined threshold, the gateway triggers a security countermeasure. The gateway may for example screen out the message it received at the first step by ignoring it instead of transmitting it to its intended destination, either the client device or the application server. The gateway may trigger/perform other security countermeasures instead or in addition to screening out the message. It may for example increase a counter counting the number of detected malicious requests, send a security alert message to an administrator or to a Security Operations Center (SOC), close an open connection between the gateway and the sender of the request or put the IP address of the sender of the request on a blacklist.

According to a second aspect, the invention is also related to a computer program product directly loadable into the memory of at least one computer, comprising software code instructions for performing the steps of the method according to the first aspect as described above when said product is run on the computer.

According to a third aspect, this invention therefore relates also to a system 300 comprising an applicative gateway 304 and an applicative risk computer 305 configured for performing the steps of the method according to the first aspect as described here above.

Said applicative gateway 304 is configured for filtering, with said applicative risk computer, a message comprising arguments, to be exchanged between a client device and an application server, said applicative gateway being configured for applying a positive filtering and said applicative risk computer being configured for applying a negative filtering. Said applicative gateway comprises a processor 401, a memory 405 and an interface 406 configured for connecting said applicative gateway to said client device, to said application server and to said applicative risk computer.
Said applicative gateway is configured for :
∘ during a configuration phase:
   ▪ obtaining an Application Programming Interface (API) description file comprising templates of message arguments and indicating for each template whether an argument matching said template shall be subject or not to a negative filtering by the applicative risk computer,
∘ at runtime:
   ▪ receiving a message from said client device or application server,
   ▪ applying a positive filtering to said received message,
   ▪ generating from said received message a message extract, wherein said message extract comprises arguments of said received message which require a negative filtering by the applicative risk computer according to said obtained API description file, and wherein said message extract does not comprise arguments of said received message which do not require a negative filtering by the applicative risk computer according to said obtained API description file,
   ▪ sending said generated message extract to said applicative risk computer,
   ▪ receiving from the applicative risk computer a risk score computed by the applicative risk computer from said message extract,
   ▪ when said received risk score is above a predetermined threshold, triggering a security countermeasure.

As a result, the method, system and applicative gateway according to the invention enables to combine both a positive filtering and negative filtering of a message, at a reduced cost since only the gateway has to parse in full the message it receives, and the negative filtering is only applied to the message extract which is shorter that the full message. This cost reduction does not come at the expense of security since all message arguments are subject to a positive filtering, and also to a negative filtering if needed according to the API description file.

## Claims

1. A method for filtering a message comprising arguments, to be exchanged between a client device (301) and an application server (303), performed by an applicative gateway (304) connected to said client device and said application server and configured for applying a positive filtering, and by an applicative risk computer (305) connected to said applicative gateway and configured for applying a negative filtering,
said method comprising, performed by said applicative gateway (304) :
• during a configuration phase:
∘ obtaining (S0) an Application Programming Interface (API) description file comprising templates of message arguments and indicating for each template whether an argument matching said template shall be subject or not to a negative filtering by the applicative risk computer,
• at runtime:
∘ receiving (S1) a message from said client device or application server,
∘ applying a positive filtering (S2) to said received message,
∘ generating, from said received message, a message extract (S3), wherein said message extract comprises arguments of said received message which require a negative filtering by the applicative risk computer according to said obtained API description file, and wherein said message extract does not comprise arguments of said received message which do not require a negative filtering by the applicative risk computer according to said obtained API description file,
∘ sending (S4) said generated message extract to said applicative risk computer,
∘ receiving (S6) from the applicative risk computer a risk score computed by the applicative risk computer from said message extract,
∘ when said received risk score is above a predetermined threshold, triggering a security countermeasure (S7).

2. The method of claim 1, wherein said message is a HTTP request to a web application or a HTTP answer generated by said web application.

3. The method of claims 1 or 2, wherein, in said API description file, each message argument template comprises at least one parameter among an argument's name, an argument's type and an argument's value pattern.

4. The method of any of claims 1 to 3, wherein in said API description file, each message argument template comprises a field indicating whether any argument matching said template shall be subject or not to a negative filtering by the applicative risk computer.

5. A computer program product directly loadable into the memory of at least one computer, comprising software code instructions for performing the steps of any one of claims 1 to 4, when said product is run on the computer.

6. An applicative gateway (304) configured for filtering, with an applicative risk computer, a message comprising arguments, to be exchanged between a client device and an application server,
said applicative gateway being configured for applying a positive filtering and said applicative risk computer being configured for applying a negative filtering,
said applicative gateway comprising a processor (401), a memory (405) and an interface (406) and wherein :
• said interface of the applicative gateway is configured for connecting said applicative gateway to said client device, to said application server and to said applicative risk computer;
• said applicative gateway is configured for:
∘ during a configuration phase:
▪ obtaining an Application Programming Interface (API) description file comprising templates of message arguments and indicating for each template whether an argument matching said template shall be subject or not to a negative filtering by the applicative risk computer,
∘ at runtime:
▪ receiving a message from said client device or application server,
▪ applying a positive filtering to said received message,
▪ generating, from said received message, a message extract, wherein said message extract comprises arguments of said received message which require a negative filtering by the applicative risk computer according to said obtained API description file, and wherein said message extract does not comprise arguments of said received message which do not require a negative filtering by the applicative risk computer according to said obtained API description file,
▪ sending said generated message extract to said applicative risk computer,
▪ receiving from the applicative risk computer a risk score computed by the applicative risk computer from said message extract,
▪ when said received risk score is above a predetermined threshold, triggering a security countermeasure.

7. A system (300) comprising said applicative gateway (304) according to the claim 6 and an applicative risk computer (305).
